# EUROPEAN PATENT APPLICATION

(11) **EP 2 755 276 A1**
(43) Date of publication of application: **16.07.2014**
(21) Application number: 12835795.1
(22) Date of filing: 28.09.2012
(51) Int. Cl.: H01Q 1/36, H01Q 1/38, H04W 88/08

(54) **AERIAL DEVICE**

(30) Priority: 28.09.2011 CN 201110297379
(71) Applicant: Huawei Technologies Co., Ltd., Shenzhen, Guangdong 518129 (CN)
(72) Inventor: PU, Tao, Longgang Shenzhen, Guangdong 518129 (CN); QIN, Zuojun, Longgang Shenzhen, Guangdong 518129 (CN); HE, Pinghua, Longgang Shenzhen, Guangdong 518129 (CN); SUN, Dewen, Longgang Shenzhen, Guangdong 518129 (CN); SUN, Weihua, Longgang Shenzhen, Guangdong 518129 (CN)
(74) Representative: Maiwald Patentanwalts GmbH
(86) International application number: PCT/CN2012/082322
(87) International publication number: WO 2013/044847

(57) **Abstract**

An antenna apparatus is provided, including: an antenna component that is arranged on a passive side of the antenna apparatus; a radio frequency unit that is arranged on an active side of the antenna apparatus, formed by at least one independent radio frequency module, and connected to the antenna component to form an active antenna, where each radio frequency module includes a radio frequency plate; and a common unit that is arranged on the active side of the antenna apparatus and connected to the radio frequency unit and the antenna component. With the preceding antenna apparatus, each radio frequency module can be flexibly configured, thereby satisfying the requirements for different product portfolios and further simplifying field replacement and maintenance.

## Description

This application claims priority to Chinese Patent Application No. 201110297379.3, filed with the Chinese Patent Office on September 28, 2011 and entitled "ANTENNA APPARATUS", which is incorporated herein by reference in its entirety.

### FIELD OF THE INVENTION

The present invention relates to the field of wireless communications technologies, and in particular to an antenna apparatus.

### BACKGROUND OF THE INVENTION

The early product architecture for a wireless distributed base station system is generally an "RRU (Radio Remote Unit: radio remote unit)+antenna" pattern, where the antenna is a passive unit. The "RRU+antenna" pattern is generally implemented in three connection modes, which are as follows:
1) The RRU is at the bottom of a tower, the antenna is on the top of the tower, and they are connected by a cable;
2) the RRU is on the top of a tower, very close to the antenna, installed at the bottom or back of the antenna, and connected to the antenna by a cable;
3) the RRU is directly carried on the antenna and connected to the antenna by a blind-mate connector or a cable, which is a semi-integrated mode.

For the semi-integrated mode of the RRU and the antenna, generally, the RRU is directly carried on the back of the antenna, and an antenna may carry one or more RRUs. The RRU and the antenna are connected by a cable or a blind-mate connector, and these two comection modes require a good waterproofing design. When a cable connection is adopted, multiple RRUs may be installed on one antenna.

When a blind-mate connection is adopted in the semi-integrated mode of the RRU and the antenna, a duplexer may be installed on the RRU side, multiple pairs of blind-mate radio frequency interfaces are arranged on the duplexer, and the duplexer and the antenna arc connected by a blind-mate connector. In addition, in a blind-mate connection, a duplexer may be installed on the antenna side instead of on the RRU side, multiple pairs of blind-mate radio frequency interfaces are arranged on the duplexer, and the duplexer and the RRU are connected by a blind-mate connector.

The evolution trend for late products is the integration of the RRU and the antenna, and such an antenna system that integrates the RRU and a passive antenna is generally called an AAS (Active antenna System: active antenna system), where the RRU serving as an active unit and a base station antenna serving as an passive unit are integrated in one module as a whole for overall installation and maintenance. Generally, the side where the RRU serving as an active unit resides is called an active side, and the side where the antenna serving as a passive unit resides is called an antenna side. During the installation of the AAS having an integrated architecture, only an antenna needs to be installed.

However, it is difficult to perform field replacement and maintenance in the preceding integrated mode of the RRU and the antenna.

### SUMMARY OF THE INVENTION

Embodiments of the present invention provide an antenna apparatus for simplifying field replacement and maintenance.

The embodiments of the present invention can be specifically implemented by the following technical solutions:
In one aspect, an antenna apparatus is provided, including: an antenna component that is arranged on a passive side of the antenna apparatus; a radio frequency unit that is arranged on an active side of the antenna apparatus, formed by at least one independent radio frequency module, and connected to the antenna component to form an active antenna, where each radio frequency module includes a radio frequency plate; and a common unit that is arranged on the active side of the antenna apparatus and connected to the radio frequency unit and the antenna component.

In another aspect, an antenna apparatus is provided, including: an antenna component that is arranged on a passive side of the antenna apparatus and includes a combiner, a phase shifter, and a splitter network; a radio frequency unit that is arranged on an active side of the antenna apparatus, formed by at least one independent radio frequency module, and connected to the antenna component to form an active antenna, where each radio frequency module includes a radio frequency plate and a duplexer module; and a common unit that is arranged on the active side of the antenna apparatus and connected to the radio frequency unit.

In still another aspect, an antenna apparatus is provided, including: an antenna component that is arranged on a passive side of the antenna apparatus and includes a combiner, a phase shifter, and a splitter network; a radio frequency unit that is arranged on an active side of the antenna apparatus, formed by at least one independent radio frequency module, and connected to the antenna component to form an active antenna, where each radio frequency module includes a radio frequency plate; a common unit that is arranged on the active side of the antenna apparatus and connected to the radio frequency unit; and a replaceable duplexer component that is arranged on the active side of the antenna apparatus, connected between the antenna component and the radio frequency unit, and formed by at least one independent duplexer module, where each duplexer module is connected to one radio frequency module.

In still another aspect, a base station is provided, including any one of the preceding antenna apparatuses; and a communications system is provided, including the preceding base station.

With the preceding antenna apparatus, each radio frequency module can be flexibly configured, thereby satisfying the requirements for different product portfolios and further simplifying field replacement and maintenance.

### BRIEF DESCRIPTION OF THE DRAWINGS

FIG. 1 is a schematic block diagram showing an antenna apparatus according to an embodiment of the present invention;
FIG. 2a-FIG 2c are schematic diagrams showing different configurations of a radio frequency module and a common module according to an embodiment of the present invention;
FIG. 3 is a schematic diagram showing a connection between a common module and each radio frequency module according to an embodiment of the present invention;
FIG. 4 is a schematic diagram showing a first configuration of a radio frequency unit and an antenna component according to an embodiment of the present invention;
FIG. 5 is a schematic diagram showing a second configuration of a radio frequency unit and an antenna component according to an embodiment of the present invention;
FIG. 6 is a schematic diagram showing a third configuration of a radio frequency unit and an antenna component according to an embodiment of the present invention;
FIG. 7a and FIG 7b are schematic diagrams showing a fourth configuration of a radio frequency unit and an antenna component according to an embodiment of the present invention; and
FIG 8a and FIG. 8b are schematic diagrams showing a fifth configuration of a radio frequency unit and an antenna component according to an embodiment of the present invention.

### DETAILED DESCRIPTION OF THE EMBODIMENTS

To make the objectives, technical solutions, and advantages of the present invention more comprehensible, the following further describes the technical solutions of the present invention in detail with reference to embodiments and the accompanying drawings.

As described above, for the AAS of the current wireless distributed base station system, the RRU is integrated with a passive antenna, and the RRU is connected to the antenna by a cable or a blind-mate connector. For a cable connection, field replacement and maintenance are not supported; for the RRU in blind-mate mode, it is difficult to perform field replacement and maintenance due to its large size and weight.

For example, when the RRU is integrated with a passive antenna, the RRU and the passive antenna need to be combined for overall installation and maintenance. In some scenarios, for example, when the antenna is a low-frequency antenna, such as an 800 M-900 M antenna with a length of possibly up to 2 m or even 2.6 m and a total weight of possibly more than 40 kg, it is difficult to perform overall installation and maintenance, several persons (typically 3-4 persons) are needed for operations on the tower, and in some scenarios, even a crane is needed, which is costly and hard to operate.

In addition, although the preceding integrated mode of the RRU and a passive antenna supports the simultaneous use of multiple frequency bands, it cannot flexibly configure each frequency band. When the RRU needs to be maintained in case of a fault, needs to be expanded, or the like, the AAS must be removed as a whole and then be installed as a whole after being maintained or replaced, which results in relatively complicate and costly operations.

Therefore, an antenna apparatus in the wireless distributed base station system is provided according to an embodiment of the present invention. After the antenna apparatus is installed as a whole, when subsequent maintenance, expansion, or spectrum spreading is required, the antenna apparatus may not be disintegrated as a whole; instead, active units of the antenna apparatus are directly maintained on the tower.

In the description of the embodiment of the present invention, the entire antenna apparatus is divided into an active side and a passive side; the passive side is an antenna component, which is also called a passive unit; and the active side is the RRU in the prior art, which is called an active unit. In the following description, however, the active side is mentioned as a radio frequency unit and a common unit, which are collectively called an active unit.

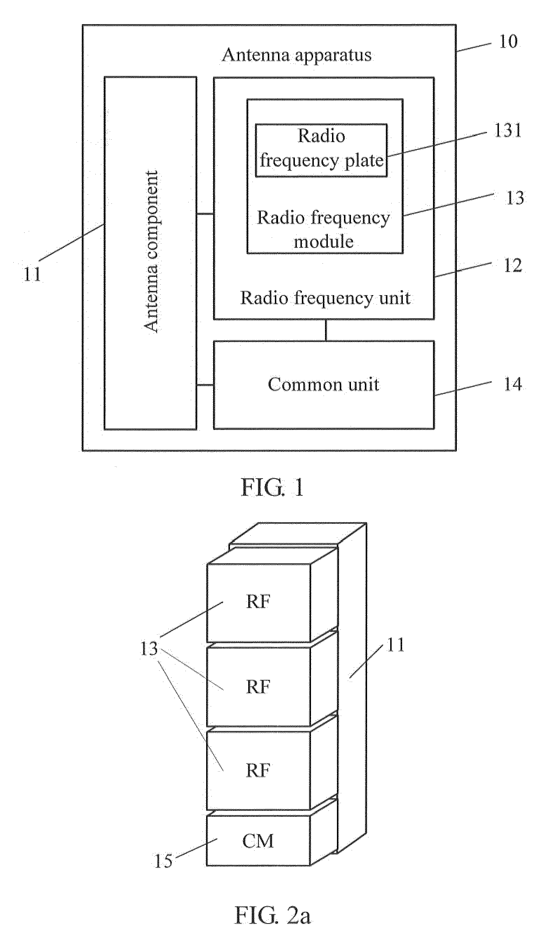

FIG 1 is a schematic block diagram showing an antenna apparatus according to an embodiment of the present invention. As shown in FIG. 1, an antenna apparatus 10 according to the embodiment of the present invention includes an antenna component 11, a radio frequency unit 12, and a common unit 14.

The antenna component 11 is arranged on the passive side of the antenna apparatus 10. The radio frequency unit 12 is arranged on the active side of the antenna apparatus 10, formed by at least one independent radio frequency module 13, and connected to the antenna component 11 to form an active antenna, where each radio frequency module 13 includes a radio frequency plate 131.

The common unit 14 is arranged on the active side of the antenna apparatus and connected to the radio frequency unit 12 and the antenna component 11.

For brevity, the block diagram of FIG. 1 shows only one radio frequency module 13. However, this does not limit the scope of the embodiment of the present invention. The radio frequency unit 12 in the embodiment of the present invention may be formed by two or more radio frequency modules 13. "Independent" mentioned in the embodiment of the present invention indicates independent field installation, maintenance, or replacement.

In the embodiment of the present invention, an active unit of the existing antenna apparatus is further divided into a radio frequency unit and a common unit, and the radio frequency unit and the common unit may be combined to meet various product requirements. In such situation, due to a division of the active unit on the active side and the antenna component on an antenna side and a further division of the active unit into multiple different modules, the size and weight of each maintainable unit will be greatly reduced, thereby simplifying field operations.

As described above, according to the embodiment of the present invention, the active unit of the antenna apparatus is separated from the antenna component. The antenna component may be one group of antenna, or two or three groups of antenna, or multiple groups of antenna. The antenna component supports the integration of a high-frequency antenna, a low-frequency antenna, an antenna combined by two high-frequency antennas, or an antenna combined by a high-frequency antenna and a low-frequency antenna, and supports coaxial and resonator antenna technologies.

In terms of function, an active unit is further divided into a common unit and a radio frequency unit. The radio frequency unit may be divided into at least one radio frequency module according to the actual requirements. The common unit may also be divided into at least one common module. FIG. 2a-FIG. 2c are schematic diagrams showing different configurations of a radio frequency module and a common module according to an embodiment of the present invention. In FIG. 2a-FIG.2c, RF (Radio Frequency: radio frequency) represents a radio frequency module 13, and CM (Common Module: common module) represents a common module 15.

As shown in FIG 2a, a radio frequency unit may be divided into M*1 radio frequency modules 13, and a single common module 15 is arranged, where M indicates the number of radio frequency modules in the longitudinal direction. In the example shown in FIG. 2a, M=3, but this does not limit the value of M in the embodiment of the present invention; that is, M may be any positive integer.

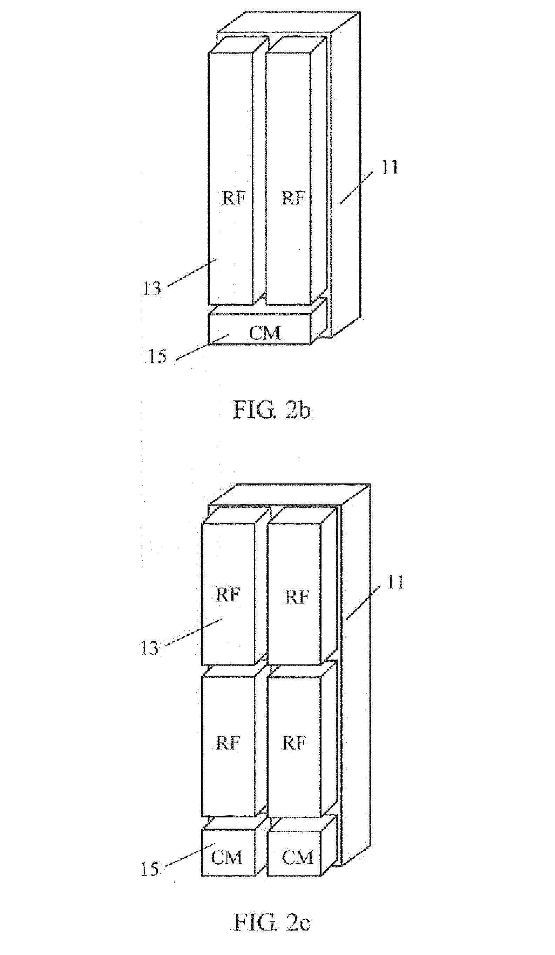

As shown in FIG 2b, a radio frequency unit 12 may be divided into 1*N radio frequency modules 13, and a single common module 15 is set, here, N is used to indicate the number of radio frequency modules in the horizontal direction. In the example shown in FIG. 2a, N=2, but this does not limit the value of N in the embodiment of the present invention; that is, N may be any positive integer.

As shown in FIG. 2c, a radio frequency unit 12 may be divided into M*N radio frequency modules 13, and a common unit may be divided into multiple common modules 15. In the example shown in FIG 2c, M=2 and N=2, but this does not limit the values of M and N in the embodiment of the present invention; that is, M and N may be any positive integers. In FIG. 2c, the common unit includes two common modules 15, but this does not limit the embodiment of the present invention; that is, the common unit may be divided into a positive integer number of common modules as required.

Multiple radio frequency modules are used to support the simultaneous use of multiple frequency bands, and multiple radio frequency modules can be combined to support all frequency bands that the antenna apparatus needs to support. Here, a person skilled in the art should understand that different radio frequency modules in the multiple radio frequency modules may support different frequency bands or the same frequency band. When two or more radio frequency modules support the same frequency band, the radio frequency power of the frequency band is increased, thereby improving the antenna performance. Each radio frequency module is connected to the antenna component on the antenna side by a blind-mate connector or a cable, and its connection mode may be the same as the connection mode of the RRU and an antenna in the prior art. The common unit, according to the actual requirements, may be formed by one or two or multiple modules. Here, when multiple frequency bands are used simultaneously, a frequency band may use a common module, or two or more frequency band modules may share one common module. Therefore, the number of common modules can be set in accordance with actual requirements.

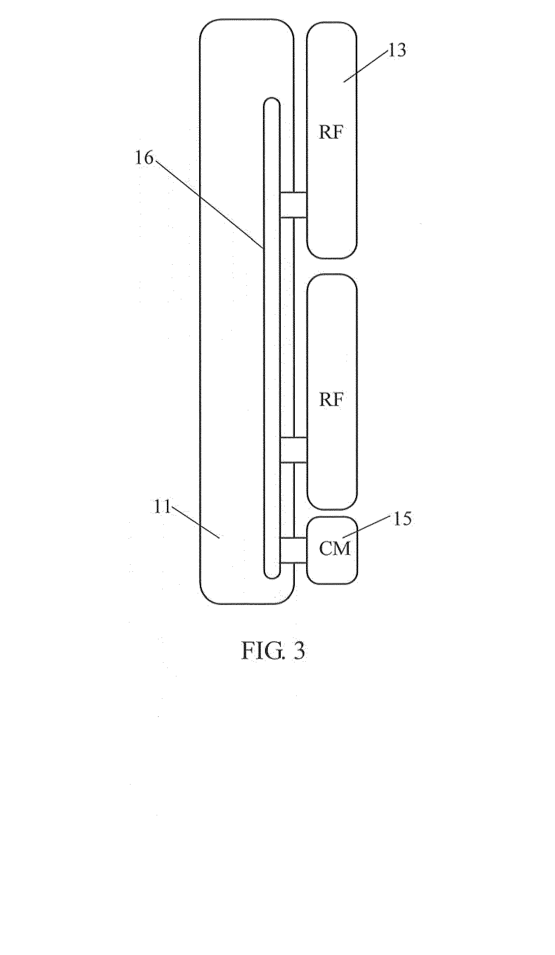

FIG. 3 is a schematic diagram showing a connection between a common module and each radio frequency module according to an embodiment of the present invention. As shown in FIG. 3, a common module 15 may be connected to each radio frequency module 13 by a backplane 16 installed on an antenna side, this connection may be a blind-mate connection or a cable connection, or the common module 15 may be connected to a radio frequency module 13 by a cable. In addition, as shown in FIG 3, each radio frequency module 13 may also be connected to the antenna component 11 on the antenna side by the backplane 16 or a cable. For brevity, FIG. 3 shows only two radio frequency modules 13, but this does not limit the number of radio frequency modules.

For each radio frequency module according to the embodiment of the present invention, a certain radio frequency module may be replaced with a passive module to form a passive antenna in a certain frequency band. Specifically, as shown in FIG. 1, because the antenna component itself is a component of the passive antenna, it may include an antenna oscillator corresponding to each frequency band, and may also include at least one of a small phase shifter connecting to each antenna oscillator, a common radome, and a master reflecting plate. When the antenna component combines with a common module and a radio frequency module that serve as active units, an active antenna is formed. However, if in accordance with the specific needs, for example, when only a passive antenna instead of an active antenna is required for one or several groups of antenna in the antenna apparatus, the antenna component may not be combined with a radio frequency and a common module but is combined with a passive module to form a passive antenna. A person skilled in the art should understand that the one or several groups of the passive antenna in the preceding antenna apparatus also need to be connected to the RRU in the existing antenna apparatus to fulfill the antenna function. In other words, a modularized architecture according to the embodiment of the present invention is not only applicable to an active antenna apparatus, but is also applied to a system integrated by an active antenna and a passive antenna, in this way, resources waste can be avoided under the circumstance of requiring no active antenna.

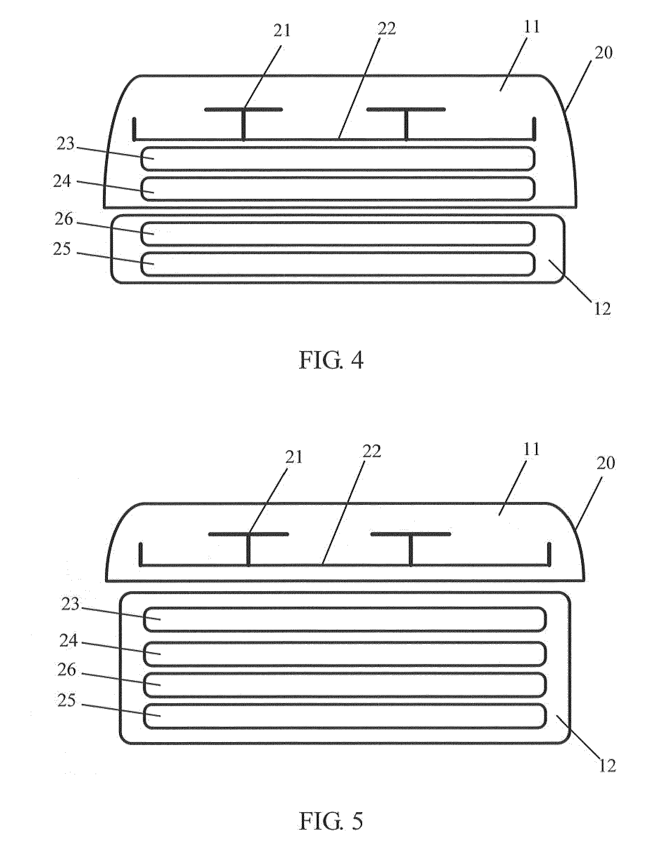

In accordance with the function of the active unit of the AAS, a radio frequency unit includes a radio frequency plate, the radio frequency plate includes a TRX (transceiver: transceiver), the radio frequency unit may also include parts of a power supply, a duplexer, some or all splitter networks on the antenna side, while the common unit may include several connectors that are connected to a backplane, or may also include the power supply or some intermediate frequency processing parts. In the embodiment of the present invention, a configuration of a common unit in different antenna apparatuses may be basically the same, but the specific configurations of a radio frequency unit and an antenna component may be different in accordance with various requirements. With reference to FIG. 4-FIG. 8b, the following is a detailed description of different configurations of a radio frequency unit and an antenna component according to the embodiment of the present invention.

FIG. 4 is a schematic diagram showing a first configuration of a radio frequency unit and an antenna component according to an embodiment of the present invention. As shown in FIG. 4, in the AAS, an antenna component 11 on an antenna side includes: a radome 20, an antenna oscillator 21, a master reflecting plate 22, a co-antenna combiner 23, a phase shifter, a splitter network 24, and other complete antenna components; and a radio frequency unit 12 includes a radio frequency plate 25 and a duplexer module 26. A person skilled in the art should understand that apart from the shown components, the antenna component 11 and the radio frequency unit 12 may also include other components that are not shown; for example, the antenna component 11 may include a resonator combiner. Here, the radio frequency unit 12 is connected to the antenna component 11 by a blind-mate connector or a cable. For the configuration shown in FIG 4, the relatively smaller number of blind-mate connectors and the relatively lower requirements for blind-mate connectors therefore simplify the implementation.

In the preceding configuration, the splitter network is configured to implement a function of splitting one channel of signals into more than two channels of signals; for example, after being split, one TRX signal drives two antenna oscillators; the splitter network may have multilevel branches, for example, after passing through a two-level 1-to-2 network, one TRX signal drives four antenna oscillators.

FIG. 5 is a schematic diagram showing a second configuration of a radio frequency unit and an antenna component according to an embodiment of the present invention. Compared with the first configuration shown in FIG. 4, as shown in FIG. 5, a combiner 23, a phase shifter, a splitter network 24 and other components of an antenna component 11 are placed on an active side, that is, placed into a radio frequency unit 12, so that they can be replaced on site together with the active side. In the situation shown in FIG. 5, the antenna side may be left with only a small part of a splitter network and a reflecting plate 22, an antenna oscillator 21, a radome 20, and few antenna components. Here, the radio frequency unit 12 is connected to the antenna component 11 by a blind-mate connector or a cable. For the configuration shown in FIG 5, antenna normalizing is easier in different frequency bands or under different scenarios, that is, under all scenarios, antenna replacement is not required, and only a radio frequency module is replaced. However, in this configuration, the number of blind-mate connectors is comparatively larger, and the requirements for blind-mate connectors are high.

In the preceding configuration, the splitter network is divided into two parts, one part with each frequency band being the same is on the antenna side, and another part with each frequency band being the different is on the radio frequency module side.

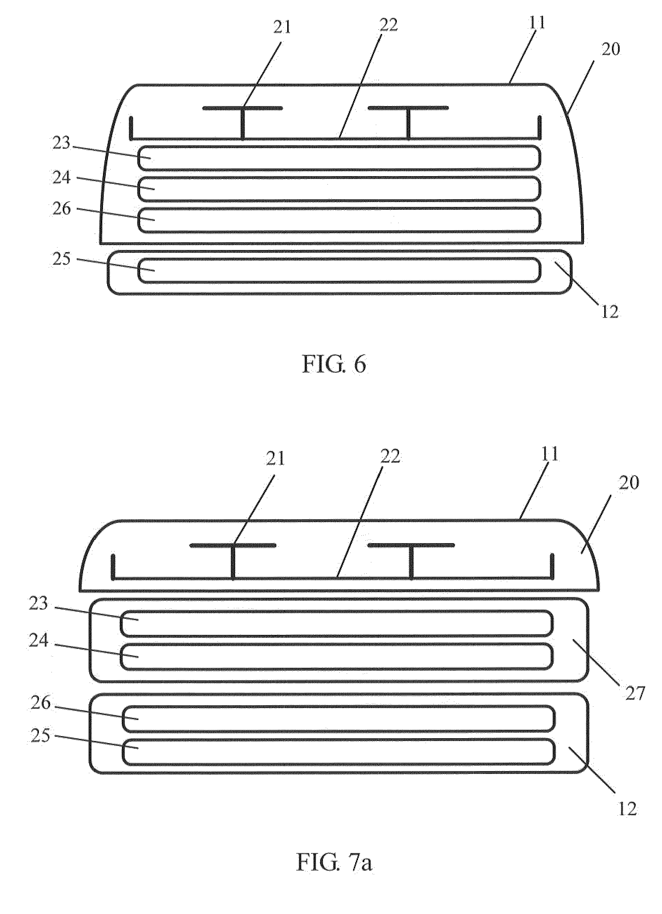

FIG. 6 is a schematic diagram showing a third configuration of a radio frequency unit and an antenna component according to an embodiment of the present invention. Compared with the first configuration shown in FIG. 4, as shown in FIG. 6, a duplexer module 26 in a radio frequency unit 12 is further placed on the antenna side, in this way, the replaceable radio frequency unit 12 may be left with only a radio frequency plate 25. Here, the radio frequency unit 12 is connected to an antenna component 11 by a blind-mate connector or a cable. For the configuration shown in FIG. 6, the requirements for blind-mate connectors are the lowest, but the number of blind-mate connectors is two times that of the first configuration shown in FIG. 4. In this configuration, because the blind-mate connection is from the duplexer 26 to the radio frequency plate 25, which is the equivalent of the blind-mate connection inside a radio frequency module, compared with the blind-mate connection from a duplexer to the antenna side, no passive intermodulation is required and the power is low too.

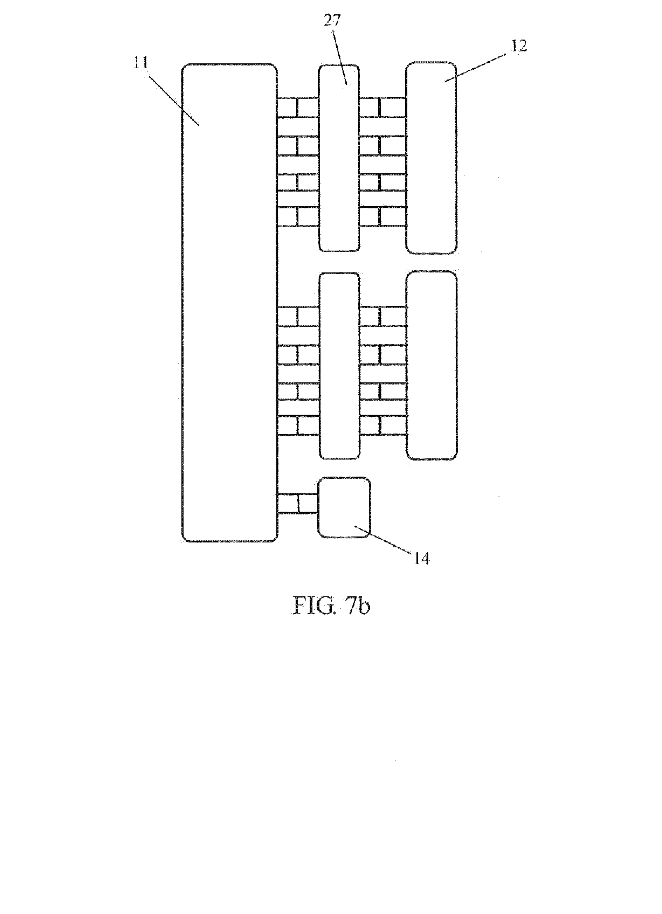

FIG. 7a and FIG. 7b are schematic diagrams showing a fourth configuration of a radio frequency unit and an antenna component according to an embodiment of the present invention. The fourth configuration may be based on either the first configuration shown in FIG. 4 or the second configuration shown in FIG 5. When the fourth configuration is based on the first configuration shown in FIG. 4, as shown in FIG. 7a, a combiner 23, a phase shifter, a splitter network 24 and other components of an antenna component 11 are made into an independent replaceable combiner component 27. When the fourth configuration is based on the second configuration shown in FIG. 5, as shown in FIG 7a, a combiner 23, a phase shifter, a splitter network 24 and other components of the radio frequency unit 12 are made into an independent replaceable combiner component 27. The independent replaceable combiner component 27 may be installed on the antenna component 11 side, installed on the radio frequency unit 12 side, or installed independently as shown in FIG. 7b. Here, if the combiner component is installed independently, the combiner component corresponds to the above mentioned passive module, thereby forming a passive antenna with the antenna component. The independent replaceable combiner network can be replaced on site. Moreover, the replaceable combiner component is connected to the antenna side and the radio frequency unit by a blind-mate connector or a cable. For the configurations shown in FIG. 7a and FIG. 7b, the configurations are more flexible, and a switchover can be flexibly performed between active and passive, but the number of blind-mate connectors increases accordingly.

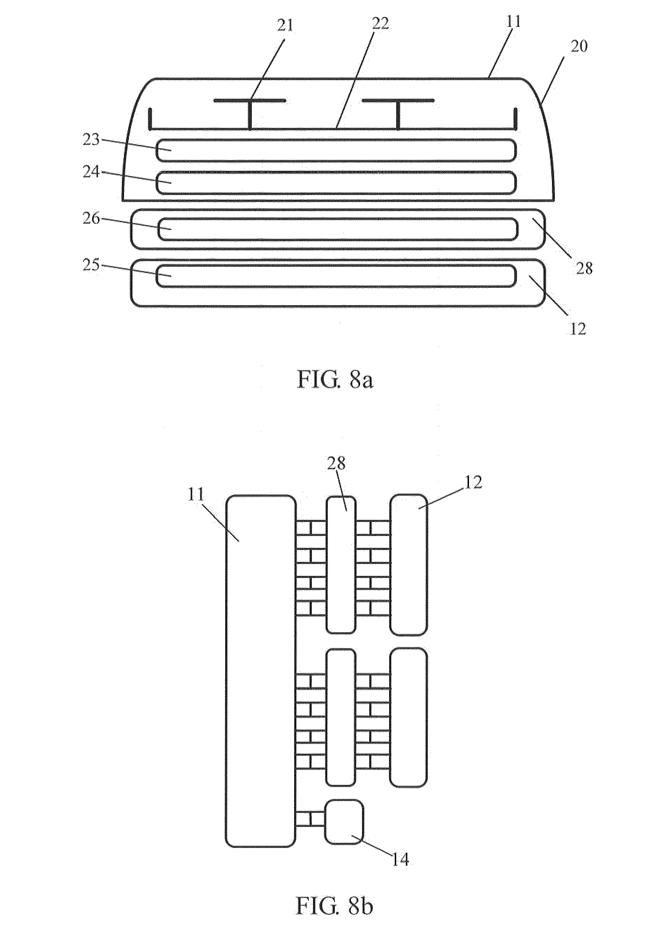

FIG. 8a and FIG. 8b are schematic diagrams showing a fifth configuration of a radio frequency unit and an antenna component according to an embodiment of the present invention. The fifth configuration may be based on either the first configuration shown in FIG. 4 or the third configuration shown in FIG 6. When the fifth configuration is based on the first configuration shown in FIG. 4, as shown in FIG. 8a, a duplexer module 26 is taken out from a radio frequency unit 12 and made into an independent replaceable duplexer component 28. However, when the fifth configuration is based on the third configuration shown in FIG. 6, as shown in FIG. 8a, the duplexer module 26 is taken out from an antenna component 11 and made into an independent replaceable duplexer component 28. Similar to the replaceable combiner component 27 in the fourth configuration, the independent replaceable duplexer component 28 may be installed on the antenna component 11 side, installed on the radio frequency unit 12 side, or installed independently as shown in FIG 8b. The independent replaceable combiner component can be replaced on site. Moreover, the replaceable combiner component is connected to the antenna side and the radio frequency unit by a blind-mate connector or a cable. For the configurations shown in FIG. 8a and FIG 8b, the configurations are more flexible, and if the radio frequency unit remains unchanged, a switchover between different frequency bands can be implemented by merely replacing the duplexer, but the number of blind-mate connectors increases accordingly.

In the first to fifth configurations of the radio frequency unit and the antenna component shown in FIG. 4 to FIG. 8b, the radio frequency unit belongs to the active side while the antenna component belongs to the passive side in the AAS. Therefore, accordingly, a device that is classified as a radio frequency unit is generally an active component, while a device that is classified as an antenna component is generally a passive component. Specifically, in the first to fifth configurations shown in FIG. 4 and FIG 8b, a radome, an antenna oscillator, a reflecting plate and a small part of splitter network are always passive components, a radio frequency plate is always an active component, while a combiner, a phase shifter, a duplexer module, other splitter network, and the like, may be either active components or passive components, depending on whether they belong to the antenna component side or the radio frequency unit side. For example, in the first configuration shown in FIG. 4, a combiner, a phase shifter and other splitter network, and the like, are passive components, while a duplexer module is an active component; in the second configuration shown in FIG. 5, a combiner, a phase shifter, a duplexer module and other splitter network, and the like, are active components; in the third configuration shown in FIG. 6, a combiner, a phase shifter, a duplexer module, other splitter network, and the like are passive components. A person skilled in the art should understand that the embodiments of the present invention are not limited to the preceding configurations.

Moreover, a person skilled in the art should understand that if the replaceable combiner component 27 and the replaceable duplexer component 28 are separated, they may be replaced independently and may be installed on the antenna side or the active side.

With the antenna apparatus according to the embodiments of the present invention, problems of difficult overall replacement and maintenance of the AAS integration solution in the prior art can be solved. Moreover, by dividing a radio frequency unit into M*N modules in accordance with the actual configuration requirements, demands for different product portfolios can be satisfied through flexible configurations. In addition, by making some units (such as duplexer and combiner components) into an independent replaceable component, the configuration is more flexible and can further simplify field replacement and maintenance.

An embodiment of the present invention further provides a base station, which includes any one of the antenna apparatuses described in the preceding embodiments.

An embodiment of the present invention further provides a communications system, which includes the base station.

The foregoing descriptions are merely specific embodiments of the present invention, but are not intended to limit the protection scope of the present invention. Any variation or replacement readily figured out by a person skilled in the art within the technical scope disclosed in the present invention shall all fall within the protection scope of the present invention. Therefore, the protection scope of the present invention stall be subject to the protection scope of the claims.

## Claims

1. An antenna apparatus, comprising:
an antenna component that is arranged on a passive side of the antenna apparatus;
a radio frequency unit that is arranged on an active side of the antenna apparatus, formed by at least one independent radio frequency module, and connected to the antenna component to form an active antenna, wherein each radio frequency module comprises a radio frequency plate; and
a common unit that is arranged on the active side of the antenna apparatus and connected to the radio frequency unit and antenna component.

2. The antenna apparatus according to claim 1, wherein:
the antenna component comprises a combiner, a phase shifter, and a splitter network, and each radio frequency module comprises a duplexer module.

3. The antenna apparatus according to claim 1, further comprising:
a replaceable duplexer component that is connected between the antenna component and the radio frequency unit and comprises a duplexer module; and
the antenna component comprises a combiner, a phase shifter, and a splitter network.

4. The antenna apparatus according to claim 1, wherein:
the antenna component comprises one part of a splitter network, and each radio frequency module comprises a combiner, a phase shifter, another part of the splitter network, and a duplexer module.

5. The antenna apparatus according to claim 1, wherein:
the antenna component comprises a combiner, a phase shifter, a splitter network, and a duplexer module.

6. The antenna apparatus according to claim 1, further comprising:
a replaceable combiner component that is connected between the antenna component and the radio frequency unit and comprises a combiner, a phase shifter, and one part of a splitter network; wherein
the antenna component comprises another part of the splitter network, and each radio frequency module comprises a duplexer module.

7. The antenna apparatus according to claim 1, wherein:
the multiple radio frequency modules are arranged as an M*N array, each radio frequency module in the array supports frequency bands that are the same or different from each other, and M and N are positive integers.

8. The antenna apparatus according to claim 7, further comprising:
the multiple radio frequency modules are combined to support all frequency bands that the antenna apparatus needs to support.

9. The antenna apparatus according to claim 1, further comprising:
a passive unit that is arranged on the active side of the antenna apparatus and formed by at least one independent passive module, wherein the at least one passive module replaces an active module of the antenna apparatus, so that the passive unit and the antenna component are connected to form a passive antenna.

10. The antenna apparatus according to claim 1, wherein:
the antenna component comprises one or more than one group of antenna.

11. The antenna apparatus according to claim 10, wherein:
the one or more than one group of antenna comprise one of or a combination of any two of a high-frequency antenna, a low-frequency antenna, an antenna combined by two high-frequency antennas and an antenna combined by a high-frequency antenna and a low-frequency antenna.

12. The antenna apparatus according to any one of claims 1 to 11, wherein:
the common unit is formed by at least one independent common module, and the common module is connected to the at least one radio frequency module by a backplane or a cable.

13. The antenna apparatus according to claim 12, wherein:
the at least one radio frequency module is connected to the antenna component by a backplane or a cable.

14. The antenna apparatus according to claim 9, wherein:
the at least one passive module is comected to the antenna component by a backplane or a cable.

15. The antenna apparatus according to claim 13 or 14, wherein:
the connection between each module and the antenna component and the connection between the modules are cable connections or blind-mate connections.

16. An antenna apparatus, comprising:
an antenna component that is arranged on a passive side of the antenna apparatus and comprises a combiner, a phase shifter and, a splitter network;
a radio frequency unit that is arranged on an active side of the antenna apparatus, formed by at least one independent radio frequency module, and connected to the antenna component to form an active antenna, wherein each radio frequency module comprises a radio frequency plate and a duplexer module; and
a common unit that is arranged on the active side of the antenna apparatus and connected to the radio frequency unit.

17. An antenna apparatus, comprising:
an antenna component that is arranged on a passive side of the antenna apparatus and comprises a combiner, a phase shifter and, a splitter network;
a radio frequency unit that is arranged on an active side of the antenna apparatus, formed by at least one independent radio frequency module, and connected to the antenna component to form an active antenna, wherein each radio frequency module comprises a radio frequency plate;
a common unit that is arranged on the active side of the antenna apparatus and connected to the radio frequency unit; and
a replaceable duplexer component that is arranged on the active side of the antenna apparatus, connected between the antenna component and the radio frequency unit and formed by at least one independent duplexer module.

18. The antenna apparatus according to claim 17, wherein each independent duplexer module in the replaceable duplexer component is correspondingly connected to one independent radio frequency module separately.

19. A base station, comprising the antenna apparatus according to any one of claims 1-18.

20. A communications system, comprising the base station according to claim 19.
